# EUROPÄISCHE PATENTSCHRIFT

(11) **EP 1 042 757 B1**
(45) Veröffentlichungstag und Bekanntmachung des Hinweises auf die Patenterteilung: **02.07.2003**
(21) Anmeldenummer: 99950712.2
(22) Anmeldetag: 13.10.1999
(51) Int. Cl.: H01B 3/04, H02K 3/30

(54) **VERFAHREN ZUR HERSTELLUNG VON IMPRÄGNIERBAREN FEINGLIMMERBÄNDERN MIT EINGEBAUTEM BESCHLEUNIGER**
METHOD FOR PRODUCING IMPREGNABLE FINE MICA TAPES WITH AN INCORPORATED ACCELERATOR
PROCEDE DE PRODUCTION DE RUBANS DE MICA FIN IMPREGNABLES A ACCELERATEUR INTEGRE

(30) Priorität: 16.10.1998 EP 98890305
(43) Veröffentlichungstag der Anmeldung: 11.10.2000
(73) Patentinhaber: ISOVOLTA AG, 2355 Wiener Neudorf (AT)
(72) Erfinder: GSELLMANN, Helmut, A-8010 Graz (AT); HAFNER, Bernhard, A-8045 Graz (AT); RABER, Michael, A-8052 Graz (AT)
(74) Vertreter: Dungler, Karin
(86) Internationale Anmeldenummer: EP9907668
(87) Internationale Veröffentlichungsnummer: WO00024006

(56) Entgegenhaltungen:
- EP-A- 0 031 555
- EP-A- 0 194 974
- EP-A- 0 355 558
- DE-B- 2 142 571
- FR-A- 2 132 688
- DATABASE WPI Section Ch, Week 9532 Derwent Publications Ltd., London, GB; Class A21, AN 95-243706 XP002095622 & JP 07 149928 A (MITSUBISHI ELECTRIC CORP), 13. Juni 1995 (1995-06-13)
- DATABASE WPI Section Ch, Week 8010 Derwent Publications Ltd., London, GB; Class A21, AN 80-17461C XP002095623 & JP 55 011852 A (HITACHI CHEM CO LTD), 28. Januar 1980 (1980-01-28)

## Beschreibung

Die Erfindung betrifft ein Verfahren zur Herstellung von imprägnierbaren Feinglimmerbändern mit eingebautem Beschleuniger, die nach dem Aufwickeln auf die Leiter der Wicklungen von elektrischen Maschinen mit einem Lösungsmittel-freien Imprägnierharz getränkt und danach unter Wärmeeinwirkung ausgehärtet werden, wobei eine Feinglimmerfolie mit einem Pulverlack-Harzsystem bestreut und die mit dem Pulverlack bestreute Seite der Feinglimmerfolie mit einem Trägermaterial unter dem Einfluß von Druck und Wärme verklebt wird.

### Stand der Technik

Zur Isolierung von Wicklungselementen wie beispielsweise Leiterstäben in rotierenden elektrischen Hochspannungsmaschinen hat sich in den letzten Jahren die Tränktechnik auf Basis einer Vakuum-Druckimprägnierung stark durchgesetzt. Dabei werden die Wicklungselemente aus konstruktionstechnischen Gründen entweder als Formspulen oder Leiterstäbe, vorzugsweise Röbelstäbe, ausgebildet. Diese Wicklungselemente werden mit einer Glimmer-hältigen Hauptisolation versehen und im Vakuum-Druckimprägnierverfahren weiterbehandelt. Dabei werden als Imprägnierharze Epoxidharze, vorzugsweise niedrigviskose Lösungsmittel-freie Harzsysteme eingesetzt.

Diese durchtränken nun die aus mehreren Wicklungslagen gebildete Glimmer-hältige Hauptisolation, sodaß Hohlräume, welche zwischen den Wicklungslagen Teilentladungen hervorrufen können, vollständig ausgefüllt werden.

Die Wicklungslagen der Hauptisolation werden durch Glimmer-hältige Isolierbänder ausgebildet. Diese bestehen aus einer Feinglimmerfolie, welche mittels eines pulverförmigen Kleberharzes mit einem Trägermaterial verklebt ist.

Das Trägermaterial soll porös sein, damit die Lösungsmittel-freien Imprägnierharze dieses durchtränken können. Um die Vernetzungsreaktion des Imprägnierharzes während des Aushärtungsprozesses zu beschleunigen, werden die eingesetzten Feinglimmerfolien zusätzlich mit Beschleuniger imprägniert.

Als Pulverlack-Harzsystem werden vorzugsweise Härter-freie Harzsysteme eingesetzt, die eine vollständige Löslichkeit im Imprägnierharz aufweisen und in dieses während des Härtungsprozesses einreagieren.

Dennoch gelingt es mit diesen Beschleuniger-hältigen Isolierbändern unter Anwendung von Härter-freien Pulverlack-Harzsystemen Isolationswandstärken bis ca. 3,5 mm vollständig und in relativ kurzer Imprägnierzeit zu durchtränken.

Es hat sich jedoch gezeigt, daß mit zunehmender Größe und Leistung von Generatoren relativ dicke Isolationswandstärken notwendig werden, welche ebenso gänzlich mit Lösungsmittel-freien Imprägnierharz während der Tränkphase durchtränkt werden sollen.

Beim Einsatz des vorgenannten Beschleuniger-hältigen Glimmerbandes, welches ein Härter-freies Pulverlack-Harzsystem aufweist, hat es sich jedoch gezeigt, daß bei dicken Isolationswandstärken von über 3,5 mm diese nicht mehr vollständig mit Imprägnierharz durchtränkt werden. Die nicht durchtränkten Wicklungslagen sind Fehlstellen im Isolationssystem und bilden daher die Ursache für einen eventuellen späteren Ausfall.

### Darstellung der Erfindung

Der Erfindung liegt daher die Aufgabe zugrunde, die aus dem Stande der Technik vorbekannten Nachteile dieser Beschlcuniger-hältigen Glimmerbänder auszuschließen. Erfindungsgemäß wird in das eingangs genannte Verfahren zur Herstellung von imprägnierbaren Feinglimmerbändern mit eingebautem Beschleuniger ein Härter-hältiges Pulverlack-Harzsystem eingesetzt, welches beim Verkleben der Feinglimmerfolie mit dem Trägermaterial bei erhöhter Temperatur sehr rasch aushärtet.

Überraschenderweise wurde dabei gefunden, daß durch den Einsatz, eines Härter-hältigen Pulverlack-Harzsystems als Klebeharz bei Beschleuniger-hältigen Glimmerbändern ebenso auch dicke Isolationswandstärken über 3,5 mm gänzlich durchimprägniert werden können.

Dieser technische Effekt wird dadurch erzielt, daß bei der Verklebung des Trägermaterials mit der Feinglimmerfolie das Härter-hältige Pulverlack-Harzsystem vernetzt und eine punktförmige, im Imprägnierharz unlösliche Verklebung darstellt. Da die punktförmige Verklebung nur einen geringen Prozentsatz der imprägnierbaren Oberfläche des Trägermaterials benetzt, kann der übrige, unbenetzte Oberflächenbereich leicht durchtränkt werden. Außerdem wird durch das Aushärten des Klebers eine unerwünscht rasche Reaktion, wie es bei Härter-freien und im Imprägnierharz bei etwa 60 °C löslichen Harzsystemen der Fall ist, zwischen Pulverlack-Harz und Imprägnierharz während der Tränkphase vermieden, sodaß auch dicke Isolationswandstärken gänzlich mit Imprägnierharz durchtränkt werden.

Erfindungsgemäß wird ferner vorgeschlagen, daß das eingesetzte Härter-hältige Pulverlack-Harzsystem ein Bisphenol-A-Epoxidharz sowie ein Phenolnovolak-Epoxidharz aufweist und daß der eingesetzte Härter ein aminischer Härter, vorzugsweise ein primäres und/oder sekundäres aliphatische Amin. ist.

Vorzugsweise wird der aminische Härter im Unterschuß verwendet, sodaß bei der Härtung eine vollständige Umsetzung der Amingruppen mit den Oxirangruppen des Epoxidharzes gewährleistet ist.

Die entstehende Verbindung weist somit keine primäre Amin-Funktionen auf, ist im Imprägnierharz unlöslich und kann dadurch keine beschleunigende Wirkung auf dasselbe ausüben.

Weitere Vorteile des erfindungsgemäßen Verfahrens bestehen darin, daß das eingesetzte Trägermaterial ein Glasgewebe, ein Vlies oder eine Kunststofffolie ist und daß die eingesetzte Feinglimmerfolie mit einem Beschleuniger, vorzugsweise Zinknaphthenat, vorimprägniert wird.

### Ein Weg zur Ausführung der Erfindung

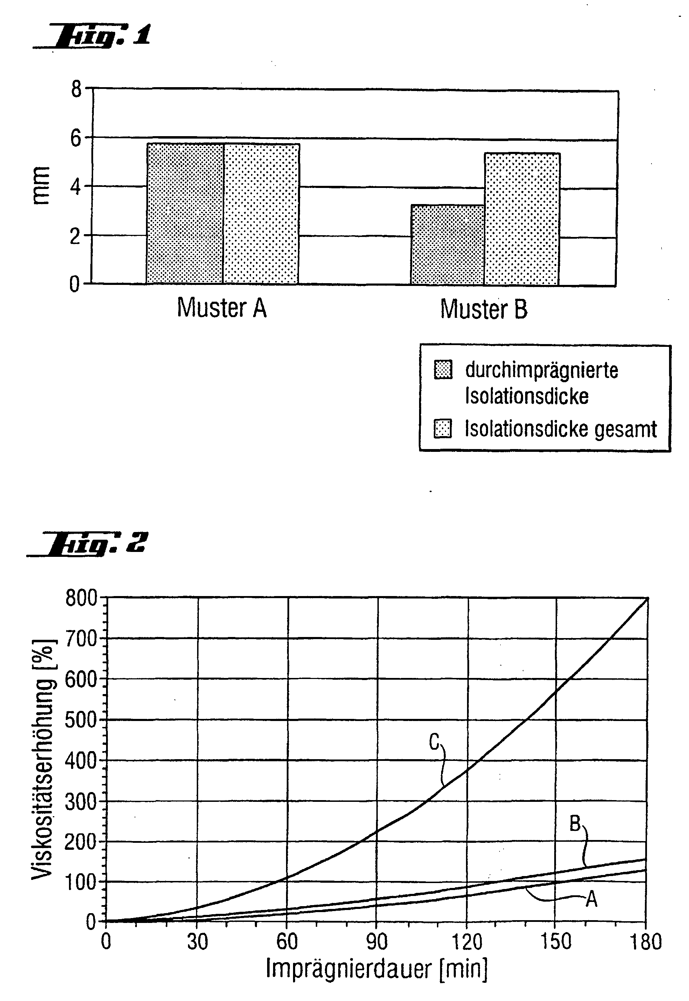

Die Erfindung wird nun anhand von Beispielen sowie den Diagrammen gemäß Figuren 1 und 2 näher erläutert:

Eine Feinglimmerfolie aus unkalziniertem Muskovit mit einem Flächengewicht von 160 g/m² wird mit einer Lösung von Zinknaphthenat in Methylethylketon imprägniert. Durch Abdampfen des Lösungsmittels wird die Feinglimmerfolie vorimprägniert und anschließend mit einem Härter-hältigen Pulverlack-Harzsystem auf Basis einer Epoxidharzmischung bestreut. Beispielsweise besteht diese aus einem Phenolnovolak-Epoxidharz und einem Bisphenol-A-Epoxidharz. Als Härter wird ein fester aminischer Härter eingesetzt. Besonders geeignet sind Härter auf Basis von primären und/oder aliphatischen Aminen. Der Erweichungspunkt des Härter-hältigen Pulverlack-Harzsystems liegt etwa um 85°C.

Anschließend wird die mit dem Härter-hältigen Pulverlack-Harzsystem bestreute Feinglimmerfolie in einen beheizbaren Kalander übergeführt, sodaß das Pulverlack-Harz aufgeschmolzen und mit dem über eine Rolle zugeführten Trägermaterial verklebt wird.

Als Trägermaterial wird
a) ein Glasgewebe mit einem Flächengewicht von 23 g/m² eingesetzt, das mit 2 g/m² eines flexibel vernetzenden Acrylharzes beschichtet ist. Um dieses aushärten zu können, wird das Glasgewebe anschließend bei einer Temperatur von 100 °C getempert,
b) oder es wird als Trägermaterial ein Glasgewebe mit einem Flächengewicht von 23 g/m², das mit 0,5 g/m² Zinknaphthenat beschichtet ist, oder
c) ein Polyestervlies mit einem Flächengewicht von 20 g/m² oder
d) eine Polyesterfolie mit einem Flächengewicht von 42 g/m² eingesetzt.

Der Vorteil eines Härter-hältigen Pulverlack-Harzsystems läßt sich anhand der Anzahl von durchimprägnierten Lagen während der Vakuum-Druckimprägnierung im Vergleich mit bekannten härterfreien Pulverlack-Harzsystemen und daraus hergestellten Isolierbändern sehr gut darstellen.

Zu diesem Zweck werden Leiterstäbe mit jeweils 20 Lagen Isolierband halbüberlappt bewickelt, die Stirnseiten der Isolation mit Harz vergossen und die so hergestellten Leiterstäbe mit einem Lösungsmittel-freien Epoxy-Säureanhydrid-Imprägnierharz bei 60 °C drei Stunden imprägniert. Nach dem Aushärten werden die Leiterstäbe quer geschnitten, um die Imprägniertiefe zu messen.

Im Diagramm gemäß Figur 1 wird das Ergebnis anhand eines Musters A, welches ein unter Verwendung eines Härter-hältigen Pulverlack-Harzsystems gemäß Beispielvariante a) hergestelltes Isolierband ist, im Vergleich mit einem bekannten Glimmer-hältigen Isolierband (Muster B), welches jedoch einen Härter-freien Pulverlack enthält, der in einem Epoxy-Säureanhydrid-Imprägnierharz bei etwa 60 °C löslich ist, dargestellt.

Aus dem Diagramm ist zu ersehen, daß das Muster A, welches ein Glimmerband mit einem Härter-hältigen Pulverharz ist, im gesamten Wicklungsquerschnitt durchimprägniert ist. Das Muster B hingegen, welches ein Glimmerband darstellt, das mit einem härterfreien Pulverlack hergestellt wurde, zeigt eine nur teilweise Durchimprägnierung der Lagen, nämlich lediglich bis zu etwa zwei Drittel. Die Ursache für diese unzureichende Durchimprägnierung liegt darin, daß die Vernetzungsreaktion zwischen Pulverlack-Harz und Lösungsmittel-freien Imprägnierharz durch die Maßgabe eines Härter-freien Pulverlack-Harzes in Verbindung mit einem Beschleuniger derart rasch abläuft, daß es zu einem unerwünschten Viskositätsanstieg des Imprägnierharzes und schließlich zum gänzlichen Stillstand des Imprägnierschrittes kommt.

Beim erfindungsgemäßen Fall nach Muster A hingegen ist die Beschleunigerkomponente durch die Härtung des Pulverlack-Harzsystems in bevorzugter Weise derart blockiert, daß die Durchtränkung sämtlicher Lagen bewirkt wird.

Dieser unerwünschte Viskositätsanstieg in der Tränkphase wird anhand von Untersuchungen an verschiedenen Harzsystemen in einem Rheometer erläutert und graphisch im Diagramm gemäß Figur 2 dargestellt:

Es wurden als Referenzsysteme
- ein Bisphenol A/Säureanhydridharz, das nur mit Zinknaphthenat beschleunigt ist (Kurve A),
- ein Bisphenol A/Säureanhydrid-Imprägnierharz, Zinknaphthenat und ein Härter-hältiges Pulverlack-Harzsystem (Kurve B) gemäß der Erfindung und
- ein Bisphenol A/Säureanhydrid-Imprägnierharz, Zinknaphthenat und ein Härter-freies Pulverlack-Harzsystem (Kurve C) nach dem Stand der Technik
im Verhältnis ihrer Gewichtsanteile in einer vollständig durchtränkten Isolation zusammengemischt und mit einem Rheometer der Viskositätsverlauf bei 60 °C über die Zeit gemessen.

Kurve A gibt den Verlauf einer Imprägnierung eines Beschleuniger-hältigen Feinglimmerbandes wieder, wie er ohne Vorhandensein störender Zusatzstoffe (reaktive Klebesysteme) im Band ablaufen würde.

Trotz Zugabe des Härter-hältigen Pulverlack-Harzsystems zeigt das erfindungsgemäße Referenzsystem gemäß Kurve B nur einen geringen Viskositätsanstieg im Verhältnis zu Kurve A.

Das Referenzsystem nach dem Stande der Technik gemäß Kurve C hingegen zeigt schon nach kurzer Zeit einen derart hohen Viskositätsanstieg, daß dieser zwangsläufig zum Stillstand des Tränkschrittes führen muß.

### Gewerbliche Anwendbarkeit

Anhand der Vergleichsbeispiele und unter Verwendung der vorgenannten graphischen Darstellungen gemäß Figuren 1 und 2 konnte gezeigt werden, daß sich das nach dem erfindungsgemäßen Verfahren hergestellte Feinglimmerband insbesondere für die Bereitstellung dicker Isolationswandstärken, wie sie bei Hochspannungsmaschinen notwendig sind, geeignet ist, da es in Verbindung mit den eingesetzten Imprägnierharzen in zufriedenstellender Weise durchtränkt wird und daher Fehlstellen im Isolationssystem vermieden werden können.

## Patentansprüche

1. Verfahren zur Herstellung von imprägnierbaren Feinglimmerbändern mit eingebautem Beschleuniger, die nach dem Aufwickeln auf die Leiter der Wicklungen von elektrischen Maschinen mit einem Lösungsmittel-freien Imprägnierharz getränkt und danach unter Wärmeeinwirkung ausgehärtet werden, wobei eine Feinglimmerfolie mit einem Pulverlack-Harzsystem bestreut und die mit dem Pulverlack bestreute Seite der Feinglimmerfolie mit einem Trägermaterial unter dem Einfluß von Druck und Wärme verklebt wird, **dadurch gekennzeichnet, daß** das eingesetzte Pulverlack-Harzsystem einen Härter enthält und beim Verkleben der Feinglimmfolie mit dem Trägermaterial bei erhöhter Temperatur aushärtet.

2. Verfahren nach Anspruch 1, **dadurch gekennzeichnet, daß** das eingesetzte härterhältige Pulverlack-Harzsystem eine Mischung aus einem Bisphenol-A-Epoxidharz sowie einem Phenolnovolak-Epoxidharz ist.

3. Verfahren nach Anspruch 1 oder 2, **dadurch gekennzeichnet, daß** der im Pulverlack-Harzsystem eingesetzte Härter ein aminischer Härter, vorzugsweise ein primäres und/oder sekundäres aliphatisches Amin, ist.

4. Verfahren nach einem der Ansprüche 1 bis 3, **dadurch gekennzeichnet, daß** das eingesetzte Trägermaterial ein Glasgewebe, ein Vlies oder eine Kunststofffolie ist.

5. Verfahren nach einem der Ansprüche 1 bis 4, **dadurch gekennzeichnet, daß** die eingesetzte Feinglimmerfolie mit einem Beschleuniger, vorzugsweise Zinknaphthenat, vorimprägniert wird.

## Claims

1. A method of producing fine mica tapes which can be impregnated, with an incorporated accelerator, which are soaked with a solvent-free impregnating resin after winding on the conductors of the windings of electric machines and thereafter are hardened under the action of heat, wherein the fine mica film is sprinkled with a powder coating resin system and the side of the fine mica film with the sprinkled powder coating is bonded to a supporting material under the action of pressure and heat, **characterized in that** the employed powder coating resin system includes a hardener and is hardened at an enhanced temperature when bonding the fine mica film to the supporting material.

2. A method according to claim 1, **characterized in that** the employed powder coating resin system is a mixture of a bisphenol-A epoxide resin as well as a phenol-novolak epoxide resin.

3. A method according to claim 1 or 2, **characterized in that** the hardener employed in the powder coating resin system is an amine hardener, preferably a primary and/or secondary aliphatic amine.

4. A method according to any of claims 1 to 3, **characterized in that** the supporting material employed is a glass fabric, a fleece or a plastics film.

5. A method according to any of claims 1 to 4, **characterized in that** the fine mica film employed is pre-impregnated with an accelerator, preferably zinc naphthenate.

## Revendications

1. Procédé de fabrication de rubans de mica fin imprégnables, à accélérateur intégré, qui, une fois enroulés sur les conducteurs des enroulements de machines électriques, sont imprégnés d'une résine d'imprégnation sans solvant et sont durcis sous l'action de la chaleur, une feuille de mica fin étant saupoudrée d'un système vernis en poudre-résine et la face de la feuille de mica fin saupoudrée de vernis en poudre étant collée à un matériau support sous l'action d'une pression et de la chaleur, **caractérisé en ce que** le système vernis en poudre-résine utilisé contient un durcisseur et durcit sous une température élevée lors du collage de la feuille de mica fin sur le matériau.

2. Procédé selon la revendication 1, **caractérisé en ce que** le système vernis en poudre-résine utilisé contenant un durcisseur est un mélange d'une résine époxy-bisphénol-A et d'une résine époxy-phénol-novolaque.

3. Procédé selon la revendication 1 ou 2, **caractérisé en ce que** le durcisseur utilisé dans le système vernis en poudre-résine est un durcisseur de type amine, de préférence une amine aliphatique primaire et/ou une amine aliphatique secondaire.

4. Procédé selon une des revendications 1 à 3, **caractérisé en ce que** le matériau support utilisé est un tissu de verre, un produit non tissé ou un film de matière plastique.

5. Procédé selon une des revendications 1 à 4, **caractérisé en ce que** la feuille de mica fin utilisée est pré-imprégnée d'un accélérateur, de préférence de naphténate de zinc.
